Europäisches Patentamt

European Patent Office

Office européen des brevets

Veröffentlichungsnummer: **0 289 809**

**A1**

## EUROPÄISCHE PATENTANMELDUNG

Anmeldenummer: 88105700.4

Anmeldetag: 11.04.88

Int. Cl.⁴: **B01D 53/34**

Priorität: 05.05.87 DE 3714844

Veröffentlichungstag der Anmeldung:
09.11.88 Patentblatt 88/45

Benannte Vertragsstaaten:
AT BE CH FR GB LI NL SE

Anmelder: **Kernforschungszentrum Karlsruhe GmbH**
**Weberstrasse 5 Postfach 3640**
**D-7500 Karlsruhe 1(DE)**

Erfinder: **Vogg, Hubert, Prof. Dr.**
**De-Coster-Strasse 2**
**D-7500 Karlsruhe(DE)**
Erfinder: **Braun, Hartmut, Dr.**
**Lebrechtstrasse 45d**
**D-7500 Karlsruhe(DE)**

**Verfahren zur Abscheidung von Quecksilber und organischen Stoffen aus Rauchgasen einer Verbrennungsanlage.**

Die Erfindung betrifft ein Verfahren zur Abscheidung von Quecksilber und organischen Stoffen aus Rauchgasen einer Verbrennungsanlage bei dem die Rauchgase einem Entstauber zugeführt werden, die dabei abgeschiedene Flugasche gesammelt und sodann einer thermischen Behandlung unterzogen wird. Die Erfindung hat die Aufgabe, dafür zu sorgen, daß im Zuge der thermischen Behandlung der Flugasche die dabei entstehenden Schadstoffe, insbesondere das metallische Quecksilber, nicht unkontrolliert in die Atmosphäre gelangen. Die Aufabe wird erfindungsgemäß dadurch gelöst, daß dem Abgabesystem der thermischen Flugaschebehandlung ein Jodkohleadsorberbett nachgeschaltet wird, das in der Lage ist, das dabei freiwerdende metallische Quecksilber quantitativ zu binden. Wie Untersuchungen gezeigt haben, ist bereits eine verhältnismäßig kleine Jodkohlemenge in der Lage, das metallische Quecksilber quantitativ zu binden; für handelsübliche 5%ige Jodkohle wurde eine Beladbarkeit bis zu 100 mg/g Jodkohle ermittelt.

EP 0 289 809 A1

## Verfahren zur Abscheidung von Quecksilber und organischen Stoffen aus Rauchgasen einer Verbrennungsanlage.

Die Erfindung betrifft ein Verfahren zur Abscheidung von Quecksilber und organischen Stoffen aus Rauchgasen einer Verbrennungsanlage gemäß dem Oberbegriff von Patentanspruch 1.

Seit einiger Zeit ist bekannt, daß Dioxine und Furane in Abfallverbrennungsprozessen vorzugsweise bei Temperaturen von ca. 300°C in den Flugstäuben gebildet werden. Bei höheren Temperaturen von z.B. 500 bis 600°C, oder, unter Luftausschluß, bei Temperaturen von 350 bis 400°C, tritt bereits wieder quantitative Zersetzung ein.

Die Zerstörung organischer Schadstoffe, vor allem von Dioxinen und Furanen in Flugstäuben durch thermische Behandlung findet Interesse, da die Entsorgung der Filterstäube dadurch wesentlich erleichtert wird. Wird sie mit den im Kernforschungszentrum Karlsruhe entwickelten Verfahren nach DE-PS 33 20 466 und DE-OS 33 24 133 kombiniert, dann können schlackeähnliche chemische Eigenschaften des Restprodukts und analoge Verwertungsmöglichkeiten erreicht werden.

Ein Nachteil der thermischen Behandlung von Filterstäuben ist darin zu sehen, daß die organische Schadstofffracht zwar zerstört, dafür aber in aller Regel mehr als 80 % des gesamten Quecksilberinhalts der Flugstäube gasförmig freigesetzt werden.

Bei den heute üblichen Quecksilberkonzentrationen von ca. 20 ppm in Flugaschen bedeutet dies, daß durch die thermische Behandlung pro Tonne Flugasche ca. 20 g Quecksilber freigesetzt werden. Eigene Untersuchungen haben ergeben, daß dieses Quecksilber in metallischer Form als Hg(0) emitiert wird, weil die ursprünglich an der Flugasche anhaftenden Quecksilberverbindungen wie z.B. Hg-Chlorid unter dem Einfluß der thermischen Behandlung der Flugasche zu metallischem Quecksilber reduziert werden. Das Abgas der thermischen Behandlung der Flugasche kann daher weder durch Zugabe von Aktivkohle, noch durch Naßwäsche oder andere Verfahren von Quecksilber befreit werden; es wird üblicherweise ungereinigt an die Umwelt abgegeben.

Die Erfindung hat die Aufgabe, dafür zu sorgen, daß im Zuge der thermischen Behandlung der Flugasche die dabei entstehenden Schadstoffe, insbesondere das metallische Quecksilber, aber auch etwa noch vorhandene organische Bestandteile, nicht unkontrolliert in die Atmosphäre gelangen.

Die Aufgabe wird erfindungsgemäß dadurch gelöst, daß dem Abgassystem der thermischen Flugaschebehandlung ein Jodkohleadsorberbett nachgeschaltet wird, das in der Lage ist, das dabei freiwerdende metallische Quecksilber quantitativ zu binden. Wie Untersuchungen gezeigt haben, ist bereits eine verhältnismäßig kleine Jodkohlemenge in der Lage, das metallische Quecksilber quantitativ zu binden; für handelsübliche 5%ige Jodkohle wurde eine Beladbarkeit bis zu 100 mg/g Jodkohle ermittelt.

Das Jodkohleadsorberbett kann bei Abgastemperaturen (z.B. von Umgebungstemperatur) bis 200°C, vorzugsweise um Kondensationen zu vermeiden, bei 180°C betrieben werden. Die Entsorgung der verbrauchten Jodkohle wird dadurch wesentlich erleichtert, daß durch eine Aufheizung auf Temperaturen von etwa 250°C oder mehr der weitaus größte Teil des adsorbierten Quecksilbers ausgetrieben und in einer gekühlten Vorlage wieder aufgefangen werden kann.

Die beladene Jodkohle kann andererseits auch in einer Verbrennungsanlage verbrannt werden. Das Quecksilber wird dabei zu $Hg^{2+}$ oxidiert und kann in dem der Verbrennung nachgeschalteten Rauchgasreinigungssystem abgeschieden werden.

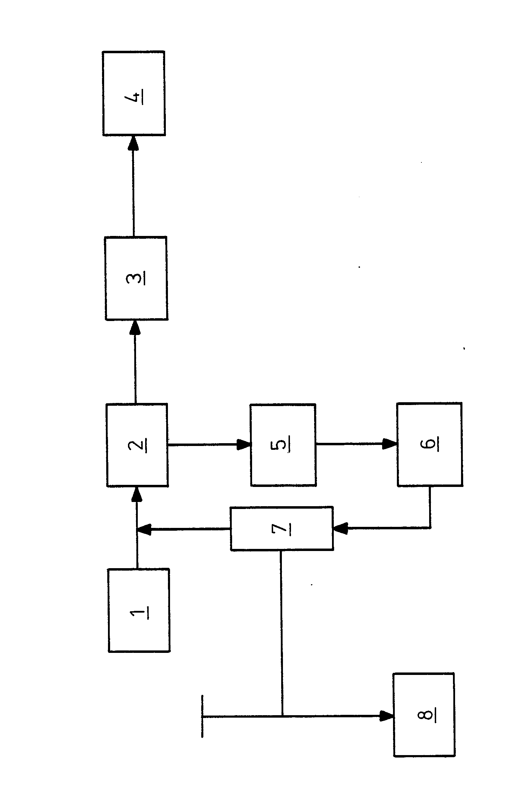

Das Verfahrensschema einer Verbrennungsanlage mit der thermischen Behandlung der Flugasche und der nachfolgenden Abgasreinigung durch ein Jodkohleadsorberbett ist in der Figur dargestellt. Die Flugasche aus dem Verbrennungsofen 1, die Quecksilber und andere Schadstoffe enthält, wird im Entstauber 2 zurückgehalten. Das derart gereinigte Rauchgas gelangt anschließend entweder direkt oder über ein Rauchgasrückhaltesystem 3 zum Kamin 4. Die im Entstauber abgetrennte Flugasche 5 wird einer thermischen Behandlung 6 unterzogen. Das Abgas dieser thermischen Behandlung wird in einem Jodkohle-Festadsorberbett 7 von Quecksilber und evtl. vorhandenen organischen Schadstoffen befreit und kann dann mit dem Rauchgas aus dem Verbrennungsofen 1 vereinigt werden.

Die Erfindung wird anhand des nachstehenden Durchführungsbeispiels näher erläutert:

Beispiel:

Das Abgas einer Anlage zur thermischen Behandlung von mit Quecksilber beladener Flugasche wurde simuliert und bei verschiedenen Sorptionstemperaturen durch ein mit Jodkohle gefülltes Adsorberröhrchen geleitet.

| T/°C | c(Hg) vor Ads. (mg/m³) | c(Hg) nach Ads. (mg/m³) | Abscheidegrad (%) |
|------|------|------|------|
| 120 | 15 | 0 | 100 |
| 150 | 15 | 0 | 100 |
| 180 | 30 | 0 | 100 |
| 200 | 30 | 0 | 100. |

Die maximale Beladbarkeit von ungemahlener, handelsüblicher 5%iger Jodkohle betrug 25 mg Hg/g, von handelsüblicher, gemahlener 5%iger Jodkohle über 100 mg Hg/g.

**Ansprüche**

1. Verfahren zur Abscheidung von Quecksilber und organischen Stoffen aus Rauchgasen einer Verbrennungsanlage (1), bei dem
   a) die Rauchgase einem Entstauber (2) zugeführt werden,
   b) die dabei abgeschiedene Flugasche gesammelt (5) und sodann
   c) einer thermischen Behandlung (6) unterzogen wird, dadurch gekennzeichnet, daß
   d) die bei der thermischen Behandlung entstehenden Abgase durch ein Jodkohleadsorberbett (7) hindurchgeführt werden, um Quecksilber und etwa anwesende organische Bestandteile der Abgase abzuscheiden, wobei
   e) die Temperatur des Jodkohleadsorberbetts auf Werten bis zu 200°C, vorzugsweise auf 180°C, gehalten wird.

2. Verfahren nach Anspruch 1, dadurch gekennzeichnet, daß das im Jodkohleadsorberbett (7) gereinigte Abgas wieder dem Rauchgas vor dem Entstauber (2) zugeführt wird.

3. Verfahren nach Anspruch 1, dadurch gekennzeichnet, daß das Quecksilber im Jodkohleadsorberbett (7) durch thermische Desorption und anschließende Kondensation zurückgewonnen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 208 490 (A/S NIRO ATOMIZER)<br>* Ansprüche 1,6 *<br>--- | 1 | B 01 D 53/34 |
| A | FR-A-2 339 428 (METALLGESELLSCHAFT AG)<br>* Ansprüche 1,4,5 *<br>--- | 1,3 | |
| A | US-A-1 984 164 (A. STOCK)<br>* Ansprüche 1,2 *<br>----- | 1 | |

|  |  |  | RECHERCHIERTE SACHGEBIETE (Int. Cl.4) |
|---|---|---|---|
|  |  |  | B 01 D 53/00 |

Der vorliegende Recherchenbericht wurde für alle Patentansprüche erstellt

| Recherchenort | Abschlußdatum der Recherche | Prüfer |
|---|---|---|
| BERLIN | 20-06-1988 | BERTRAM H E H |